# EUROPÄISCHE PATENTSCHRIFT

(11) **EP 3 955 727 B1**
(45) Veröffentlichungstag und Bekanntmachung des Hinweises auf die Patenterteilung: **15.02.2023**
(21) Anmeldenummer: 20721466.9
(22) Anmeldetag: 16.04.2020
(51) Int. Cl.: A01D 89/00, A01B 73/00, A01D 34/66

(54) **LANDWIRTSCHAFTLICHE MASCHINE**
AGRICULTURAL MACHINE
MACHINE AGRICOLE

(30) Priorität: 16.04.2019 DE 102019110062
(43) Veröffentlichungstag der Anmeldung: 23.02.2022
(73) Patentinhaber: Reiter, Thomas, 4707 Schluesslberg (AT)
(72) Erfinder: Reiter, Thomas, 4707 Schluesslberg (AT)
(74) Vertreter: Puschmann Borchert Kaiser Klettner Patentanwälte Partnerschaft mbB
(86) Internationale Anmeldenummer: PCT/EP2020/060778
(87) Internationale Veröffentlichungsnummer: WO 2020/212534

(56) Entgegenhaltungen:
- EP-A1- 1 366 650
- EP-A1- 2 656 712
- EP-B1- 1 366 650
- US-A- 6 044 633
- US-A1- 2011 219 738
- US-B1- 6 260 629

## Beschreibung

Die Erfindung betrifft eine landwirtschaftliche Maschine, die eine Arbeitseinheit aufweist, die gegenüber einem Maschinenrahmen entlastet und in einer Arbeitsposition dynamisch relativbeweglich aufgehängt ist, und die Arbeitseinheit über Aufstandsmittel über den Boden geführt wird.

Die US 2011/0219738 A1 offenbart eine landwirtschaftliche bodengeführte Maschine mit einer Arbeitseinheit, die an einem Maschinenrahmen vertikalbeweglich über Ober- und Unterlenker gelagert ist.

Durch die Anpassung der Arbeitseinheit an das Bodenniveau führen bekannte Aufhängungen, die die Arbeitseinheit über zwei Unterlenker und einen Oberlenker an den Maschinenrahmen koppeln, zu Problemen. Lange Unterlenker bieten eine gute vertikale Bodenanpassungsfähigkeit, führen aber zu größeren Schwerpunktsabständen und dazu, dass bei niedrig liegendem Schubpunkt nur eine geringe Bodenfreiheit am Maschinenrahmen zur Verfügung steht. Kurze Unterlenker bauen kompakter und lassen ein gutes Entlastungsverhalten während des Betriebs zu. Jedoch führen kurze Unterlenker bei größerer Querneigung dazu, dass sich die Arbeitseinheit gegenüber dem Maschinenrahmen stark verdreht und nur eine geringe vertikale Bodenanpassungsfähigkeit gegeben ist.

Es ist Aufgabe der Erfindung eine landwirtschaftliche Maschine anzugeben, die bei guten dynamischen Eigenschaften und gutem Entlastungsverhalten eine weitgehend verdrehfreie Führung in dem Sinn ermöglicht, dass der Winkelfehler der Arbeitseinheit bezogen auf den Maschinenrahmen, insbesondere einen Querrahmen des Maschinenrahmens, möglichst gering bleibt. Ferner soll die Anordnung kompakt sein und eine gute vertikale Bodenanpassung ermöglichen.

Die Aufgabe wird durch die Merkmale des Anspruchs 1 gelöst.

Die Unteransprüche bilden vorteilhafte Weiterbildungen der Erfindung.

In bekannter Weise umfasst eine landwirtschaftliche Maschine einen Maschinenrahmen, insbesondre einen Querrahmen, und eine mit dem Maschinenrahmen verbundene Arbeitseinheit, die über Aufstandsmittel über den Boden geführt wird. Ferner umfasst die landwirtschaftliche Maschine eine Verbindungseinrichtung, wobei die Verbindungseinrichtung einen Verbindungseinrichtungsrahmen aufweist, wobei die Arbeitseinheit relativbeweglich zum Verbindungseinrichtungsrahmen mit diesem verbunden ist. Der Verbindungseinrichtungsrahmen ist derart mit der Arbeitseinheit verbunden, dass während einer Arbeitsstellung der Arbeitseinheit diese, relativbeweglich zum Rahmen gelagert ist. Die Verbindungseinrichtung umfasst in bekannter Weise einen Oberlenker, der die Arbeitseinheit mit dem Verbindungseinrichtungsrahmen, an einem gegenüber dem Verbindungseinrichtungsrahmen ortsfesten Oberlenkeranbindungspunkt verbindet.

Die Verbindungseinrichtung weist ferner wenigstens zwei Kurvengelenke auf, deren Drehpunkt entlang einer Kurvenbahn verschiebbar ist.

Ein Kurvengelenk im Sinne der Erfindung ist ein Loslager mit einem Drehlager, das entlang einer Kurve geführt wird. Das Kurvengelenk lässt sowohl eine Verschiebung entlang der Kurve als auch eine Drehung um den verschiebbaren Drehpunkt zu.

Der Drehpunkt liegt in der Arbeitsposition in Vertikalrichtung nach unten beabstandet zum Oberlenkeranbindungspunkt.

Ferner sind die Kurvengelenke in Querrichtung, wobei sich die Querrichtung orthogonal zu Fahrtrichtung und orthogonal zur Vertikalen erstreckt, zueinander beabstandet, wobei sich die Kurvenbahn im Wesentlichen in Vertikalrichtung erstreckt, wobei der Verbindungseinrichtungsrahmen und die Arbeitseinheit über die Kurvengelenke verbunden sind, wobei die Kurvenbahn wenigstens zwei unterschiedliche Neigungen gegenüber der Vertikalen, in der Ebene, die durch die Vertikale und die Fahrtrichtung aufgespannt wird, aufweist.

Auf diese Weise kann ein der ersten Neigung zugeordnetes Entlastungs- und Dynamikverhalten eingestellt werden, das insbesondere in der Arbeitsstellung und im Bereich der gängigsten Bodenunebenheiten wirksam ist und gute Entlastungseigenschaften und dynamische Eigenschaften aufweist. Demgegenüber kann die zweite Neigung so eingestellt sein, dass eine gute Stabilität und vertikale Führung der Arbeitseinheit gewährleistet ist, die in einem Bereich wirkt, der bei seltener vorkommenden größeren Bodenunebenheiten eingenommen wird. In diesem Fall führt die geringere Neigung im zweiten Bereich zu einem geringeren Winkelfehler der Arbeitseinheit gegenüber dem Maschinenrahmen, insbesondere einem Querrahmen des Maschinenrahmens.

Über den Maschinenrahmen wird die Arbeitseinheit in Arbeitsrichtung über den Boden bewegt. Der Maschinenrahmen kann für eine gezogene oder geschobene Anwendung ausgelegt sein. Der Maschinenrahmen kann insbesondere auch ein Querrahmen, insbesondere ein Ausleger einer gezogenen Anordnung sein.

Die Arbeitseinheit weist einen Aufstandsbereich auf. Bei ebener Aufstandsfläche in Arbeitsstellung sind die Kurvengelenke und der Oberlenker derart angeordnet, dass sich ein Momentanpol aus dem Oberlenker und den Kurvengelenken ergibt, der unterhalb des Aufstandsniveaus liegt.

Bevorzugt ist die Anordnung so gewählt, dass der Momentanpol 0 bis 0,9 m unter dem Aufstandsniveau und in einem horizontalen Abstand in Fahrtrichtung von 1m bis 3m zur Drehachse des Kurvengelenks liegt. Dadurch wird eine gewünschte entlastende Wirkung und es wird ein verbessertes dynamisches Arbeitsverhalten in der Arbeitsstellung erreicht.

Insbesondere ist die Kurvenbahn derart ausgebildet, dass in der Arbeitsstellung die Neigung der Tangente an die Kurvenbahn gegenüber der Vertikalen einen Winkel von 10° bis 45° aufweist. Der Winkel des Oberlenkers kann zur Erreichung der zuvor genannten Momentanpol-Lage entsprechend eingestellt sein.

Gemäß einer weiteren bevorzugten Ausgestaltung weist die Kurvenbahn drei Bereiche auf. Einen vertikal untersten Bereich, einen vertikal gesehen darüber liegenden mittleren Bereich, und einen vertikal über dem mittleren Bereich liegenden oberen Bereich, wobei der mittlere Bereich eine Führung in einem Winkel gegenüber der Vertikalen ermöglicht, der größer ist als der Winkel des unteren und des oberen Bereichs.

Dadurch kann für größere Abweichungen sowohl über als auch unter der bevorzugten Arbeitsstellung ein entsprechendes Verhalten der Arbeitseinheit über die Neigung der Kurvenbahn im jeweiligen Bereich eingestellt werden.

Der Winkel der Kurvenbahn des untersten und des obersten Bereichs liegt insbesondere zwischen 0° und 15°. Der Winkel des mittleren Bereichs liegt insbesondere zwischen 10° und 45°. Der Winkel der Kurvenbahn ist der Winkel der Tangente an die Kurvenbahn zur Vertikalen.

Bevorzugt ist die Länge des mittleren Bereichs etwa 50 mm bis 150 mm. So kann abhängig vom Übersetzungsverhältnis der Arbeitsbereich, in dem die Arbeitseinheit sich in ihrem Aufstandsbereich vertikal auf und ab bewegen kann, in einem Bereich von 100 mm - 300 mm liegen. Dies ist für die meisten Anwendungsfälle im landwirtschaftlichen Bereich ausreichend. Bevorzugt ist die Mittellage in der horizontalen Arbeitsstellung so eingestellt, dass der Arbeitsbereich etwa mittig geteilt ist.

Weiter bevorzugt ist vorgesehen, dass die Verschiebbarkeit des Kurvengelenks entlang der Kurvenbahn nach unten, insbesondere durch einen Anschlag, begrenzt ist. Dadurch kann durch Anheben des Verbindungseinrichtungsrahmens die Arbeitseinheit ausgehoben werden, wenn die Kurvenbahn rahmenseitig befestigt ist.

Zudem kann die Verschiebbarkeit des Kurvengelenks entlang der Kurvenbahn nach oben, insbesondere durch einen Anschlag, begrenzt sein. Dies ermöglicht ein Ausheben der Arbeitseinheit, wenn die Kurvenbahn arbeitseinheitsseitig angeordnet ist.

Bevorzugt sind die Kurvengelenke so ausgestaltet, dass die Kurvenbahn rahmenseitig und das Drehlager arbeitseinheitsseitig angebunden ist.

Dadurch kann der Stützabstand zwischen Kurvengelenk und Oberlenker beim Ausheben im Vorgewende beibehalten werden. Dadurch kann eine kompaktere und leichtere Bauweise realisiert werden, da der Abstand zwischen der Drehachse des Kurvengelenks und dem Oberlenkeranbindungspunkt an der Arbeitseinheit möglichst groß gehalten werden kann.

Gemäß einer besonders bevorzugten Ausgestaltung umfasst das Kurvengelenk eine drehbar in einer Führungsschiene geführte Rolle. Die Anbindung an das Drehlager erfolgt über die Verbindung mit der Rollenachse. Die Kräfte in Normalen-Richtung auf die Führungsfläche der Führungsschiene werden über die Aufstandsfläche der Rolle übertragen. Die Führungsfläche der Führungsschiene bildet dabei die gewünschte Kurvenbahn ab. Dies stellt eine besonders kompakte und einfache Umsetzung eines erfindungsgemäßen Kurvengelenks dar.

Die Führungsfläche kann Teil einer, die Rolle beidseitig einschließenden Führungsschiene sein. Alternativ kann die Führungsfläche auch ein Führungsblech sein, wobei dann die Rolle über eine, das Führungsblech hintergreifende Struktur in Fahrtrichtung lagegesichert ist. Die das Führungsblech hintergreifende Struktur kann durch einen Führungszapfen gebildet sein.

Weiter bevorzugt sind die Rollen koaxial zueinander gelagert. Auf diese Weise wird die gesamte Arbeitseinheit gleichmäßig geführt. Insbesondere sind die Rollen in ihrem Achsabstand festgelegt.

Die Führungsflächen oder die Führungsschienen sind bevorzugt ortsfest zueinander angeordnet. Sie können jedoch gemeinsam im Winkel um eine horizontale Achse quer zur Fahrtrichtung kippbar angeordnet sein, und / oder gemeinsam in Vertikalrichtung verschiebbar zum Maschinenrahmen ausgebildet sind.

Die Führungsflächen oder die Führungsschienen können auch über eine Gelenkanordnung, insbesondere ein Viergelenk relativ zum Maschinenrahmen verschieblich angeordnet sein, so dass die beiden Führungsschienen oder Führungsflächen gemeinsam verfahren werden.

Bevorzugt kann der Verbindungseinrichtungsrahmen beide Führungsschienen fest miteinander verbinden, wobei die Achsen der Rollen mit der Arbeitseinheit verbunden sind.

Insbesondere ist dieser Verbindungseinrichtungsrahmen relativ zum Maschinenrahmen beweglich angebunden. Dadurch kann die Bodenfreiheit beim Ausheben im Vorgewende erhöht werden. Alternativ kann der Verbindungseinrichtungsrahmen fest mit dem Maschinenrahmen verbunden sein, oder eine Baueinheit mit dem Maschinenrahmen bilden.

Insbesondere ist die Führungsschiene derart ausgebildet, dass sie die Rolle beidseitig an den Laufflächen einfasst. Dadurch kann eine sichere Führung der Rollen in allen Anwendungspositionen sichergestellt werden.

Gemäß einer weiteren bevorzugten Ausgestaltung kann die Verbindungseinrichtung einen Querlenker umfassen, der die beiden Rollen mit dem Verbindungseinrichtungsrahmen oder dem Maschinenrahmen verbindet. Auf diese Weise wird eine Querverschiebung der Rollen gegenüber den Führungsschienen vermieden.

Gemäß einer weiteren bevorzugten Ausgestaltung der Erfindung, umfasst die Verbindungseinrichtung Arretiermittel, um die Kurvengelenke in einer vertikalen Lage zu arretieren. Dadurch kann die Arbeitseinheit gegenüber dem Verbindungseinrichtungsrahmen arretiert werden, was insbesondere für die Einnahme einer kompakten Transportstellung wesentlich ist.

Zur Ausbildung einer bevorzugten Arretierungseinrichtung kann vorgesehen sein, dass diese einen Arretierbolzen aufweist und die Führungsschiene dreiseitig die Rolle einfasst, wobei die Wand, die sich stirnseitig zu den Rollen befindet, Arretier-Ausnehmungen aufweist. Der Arretierbolzen kann in die Arretier-Ausnehmungen eingreifen um die Rolle zu verriegeln. Auf diese Weise kann die Führungsscheine gleichzeitig als Kurvenbahn und Arretiermittel wirken. Insbesondere ist der Arretierbolzen axialverschieblich in der Achse der Rolle gelagert.

Der Arretierbolzen ist insbesondere hydraulisch betätigbar. Dadurch kann die Arretierung der Arbeitseinheit beispielsweise in einer Transportstellung bedarfsgemäß erfolgen.

Gemäß einer bevorzugten Ausgestaltung ist die Arbeitseinheit ein Pick-up-Bandschwader.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Schnittansicht einer erfindungsgemäßen landwirtschaftlichen Maschine;
- Fig. 2: eine perspektivische Detailansicht eines Kurvengelenks gemäß Fig. 1;
- Fig. 3: eine Schnittansicht eines Ausschnitts der Verbindungseinrichtung zwischen Arbeitseinheit und Verbindungseinrichtungsrahmen;
- Fig. 4: eine Schnittansicht der Verbindungseinrichtung;
- Fig. 5: eine Vorderansicht eines Ausschnitts der Verbindungseinrichtung in Verriegelungsposition;
- Fig. 6: eine Vorderansicht eines Ausschnitts der Verbindungseinrichtung in Aushebeposition;
- Fig. 7: eine perspektivische Komplettansicht einer landwirtschaftlichen Maschine nach dem Stand der Technik:
- Fig. 8: eine weitere Ausgestaltung eines Kurvengelenks.

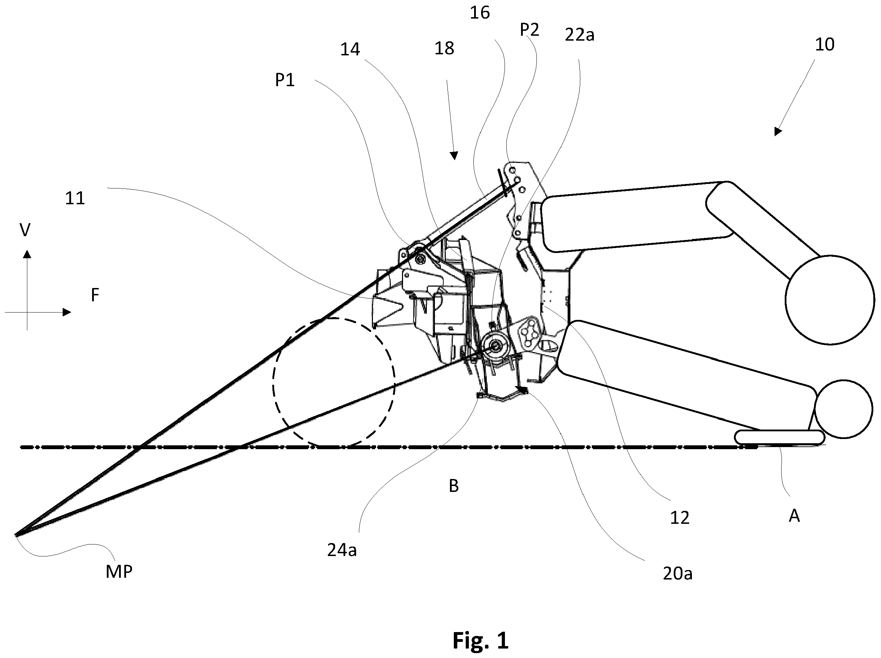

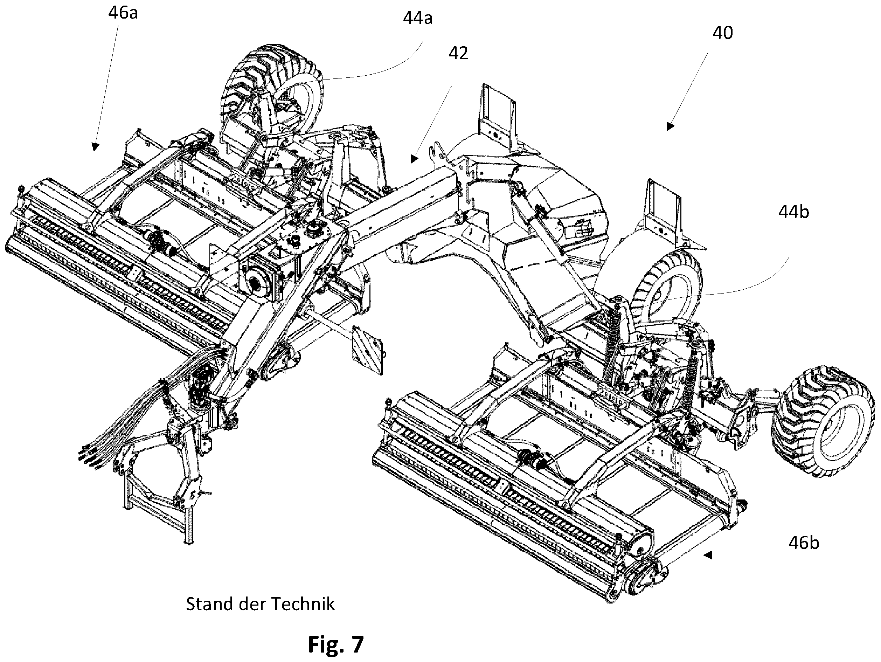

Fig. 1 zeigt eine schematische Schnittansicht einer erfindungsgemäßen landwirtschaftlichen Maschine 10. Die landwirtschaftliche Maschine 10 umfasst einen Maschinenrahmen 11 mit dem eine Arbeitseinheit 12 verbunden ist. Die Arbeitseinheit 12 ist bevorzugt als Pickup-Bandschwader ausgeführt. Die Maschine 10 kann im Wesentlichen ähnlich zu der in Fig. 7 dargestellten Maschine nach dem Stand der Technik ausgebildet sein, wobei mit einer Strichlinie das Auslegerrad ähnlich Fig. 7 angedeutet ist.

Die landwirtschaftliche Maschine 10 ist in einer Arbeitsstellung gezeigt, in der sie mit Aufstandsmitteln in einem Aufstandsbereich auf dem Boden B aufsteht, wobei der Boden B in dieser Position als horizontal angenommen ist. Die Arbeitseinheit 12 ist über eine Verbindungseinrichtung 18, die einen Verbindungseinrichtungsrahmen 14 umfasst, verbunden. Der Verbindungseinrichtungsrahmen 14 ist relativbewegungsfrei mit dem Maschinenrahmen 11 verbunden, wobei die Arbeitseinheit in Fahrtrichtung F vor dem Maschinenrahmen 11 liegt.

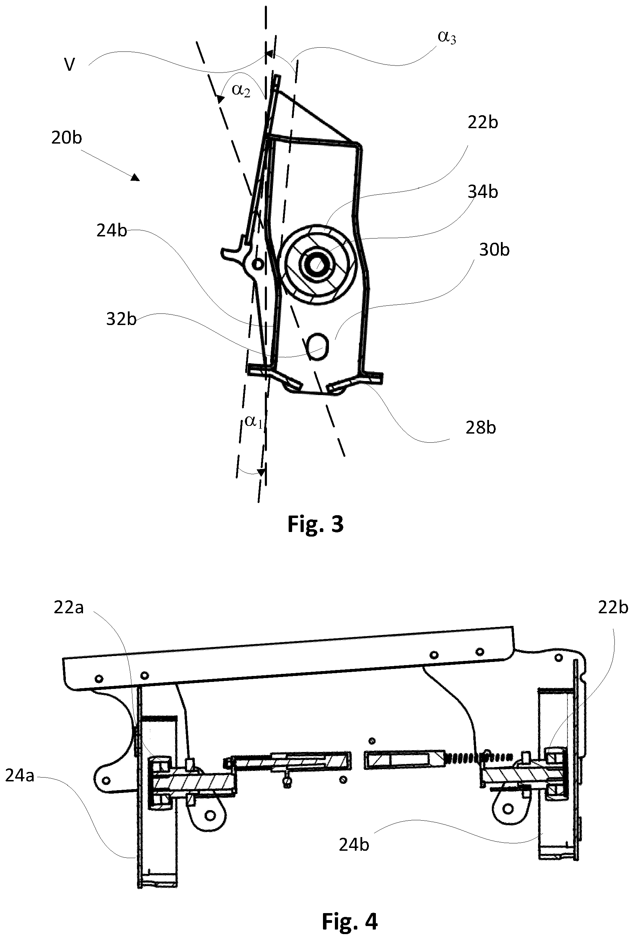

Die Verbindungseinrichtung 18 umfasst ferner einen Oberlenker 16 und zwei Kurvengelenke, wobei in der Schnittansicht nur ein Kurvengelenk 20a sichtbar ist. Das Kurvengelenk 20a ist in der Fig. 3 näher beschrieben.

Der Oberlenker 16 verbindet den Verbindungseinrichtungsrahmen 14 und die Arbeitseinheit 12 derart, dass dieser an einem Oberlenkeranbindungspunkt P1 am Verbindungseinrichtungsrahmen 14 befestigt ist.

Das Kurvengelenk umfasst eine Führungsschiene 24a, in der eine Rolle 22a geführt ist. Die Rolle 22a liegt in der Arbeitsposition vertikal beabstandet nach unten zum Oberlenkeranbindungspunkt P1. Ferner liegt die Rolle 22a in der Arbeitsposition in einem Bereich der Führungsschiene 24a, der im Winkel alpha, von insbesondere 20°, gegenüber der Vertikalen V geneigt ist.

Der Neigungswinkel des Oberlenkers 16 ist so eingestellt, dass sich ein Momentanpol MP, der sich im Schnittpunkt der Normalen auf die Führungsfläche der Führungsschiene 24a und der Verlängerung des Oberlenkers 16 ergibt. Dieser liegt im vorliegenden Beispiel ca. 0,4m unter dem Bodenniveau B und in der Horizontalen ca. 2m entgegen der Fahrtrichtung F zur Drehachse der Rolle 22a beabstandet.

Bei dieser Lage des Momentanpols MP kann das Kurvengelenk 20a über einen Bereich von +- 10 cm Bodenausgleich so kompensieren, dass immer noch eine vorteilhafte entlastende Wirkung eintritt. Bei einer größeren Abweichung erfolgt ein Sprung des Momentanpols MP, da die Rolle 22a in einen Bereich der Führungsschiene verfährt, die eine abweichende Neigung aufweist.

Durch die erfindungsgemäße Umsetzung der Anbindung der Arbeitseinheit 12 kann eine bodennahe Lagerung der Arbeitseinheit über die Kurvengelenke 20a, 20b erfolgen, wobei dennoch ein stabiler Ausgleich größerer Bodenunebenheiten möglich ist.

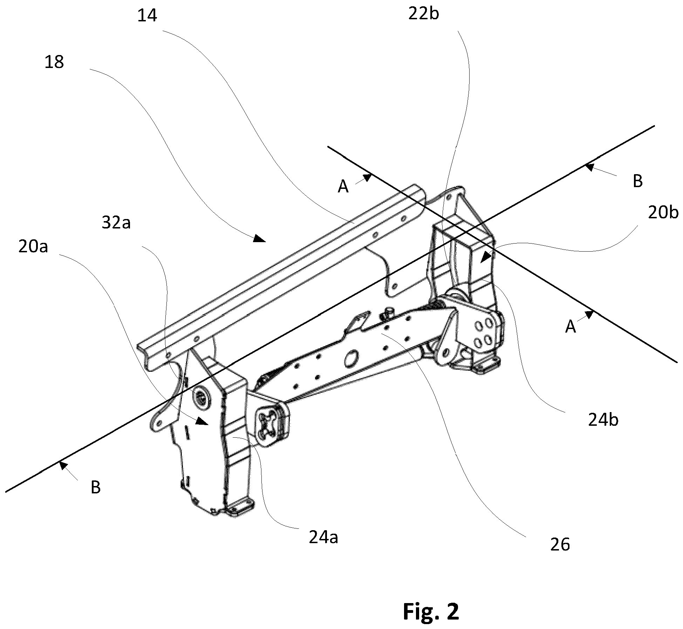

Fig. 2 zeigt eine perspektivische Ansicht eines Ausschnitts der Verbindungseinrichtung 18 zwischen Arbeitseinheit 12 und Verbindungseinrichtungsrahmen 14, der fest mit einem Maschinenrahmen der landwirtschaftlichen Maschine 10 verbunden wird. Die Verbindungseinrichtung 18 weist zwei Kurvengelenke 20a, 20b auf, die jeweils eine Führungsschiene 24a, 24b aufweisen, in der die Rollen 22a, 22b geführt sind. Die Rollen 22a, 22b der Kurvengelenke 20a, 20b sind über einen Fixierrahmen 26 verschiebungsfrei miteinander verbunden. Fig. 2 zeigt weiter eine Arretierausnehmung 32a in dem stirnseitigen Blech der Führungsschiene 24a.

Fig. 3 zeigt eine Schnittansicht A-A des Kurvengelenks 20b aus Fig. 2. Die Führungsschiene 24b bildet die Führungsbahn des Kurvengelenks ab. Die Führungsbahn weist einen vertikal oberen Bereich auf, der nahezu vertikal verläuft, einen mittleren Bereich, der den Hauptarbeitsbereich abdecken soll, der in einem Winkel alpha von etwa 20° gegenüber der Vertikalen V geneigt ist und einen vertikal unterhalb des mittleren Bereichs liegenden unteren Bereich, der wieder nahezu vertikal liegt.

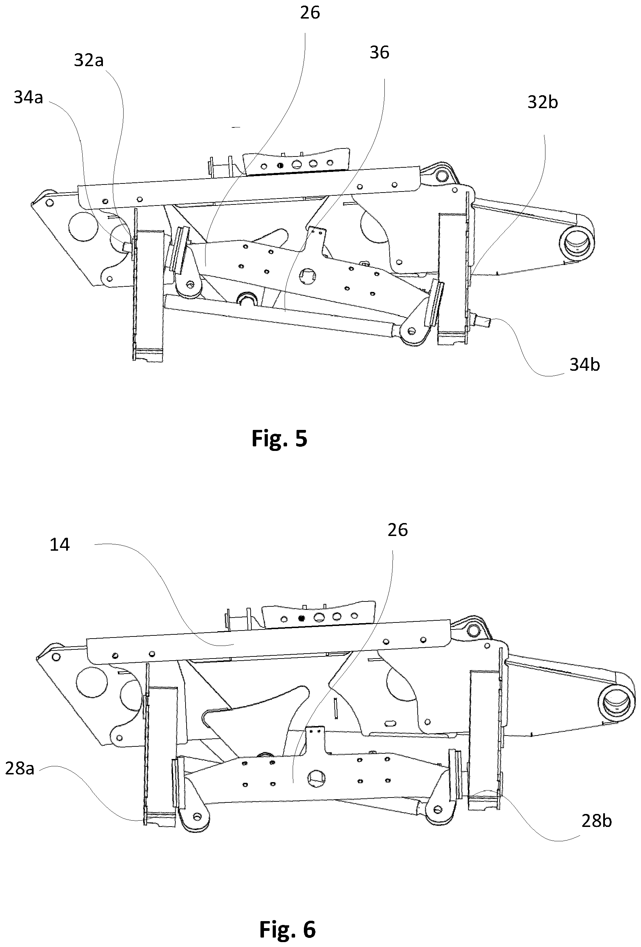

Das untere Ende des Kurvengelenks 20b ist durch ein Abschlussblech 28b gebildet, das die Führungsschiene 24b so nach unten hin abschließt, dass die Rolle 22b bei Ausheben der Arbeitseinheit am Abschlussblech anliegt. Eine Vorderansicht auf die Verbindungseinrichtung im ausgehobenen Zustand ist in Fig. 6 dargestellt.

Die Rolle 22b liegt in der dargestellten Arbeitsstellung bei ebenem Boden gerade noch im mittleren Bereich der Führungsbahn, so dass die Tangente an die Kurvenbahn im Berührpunkt der Rolle 22b noch in einem Bereich zwischen 15° und 45° liegt.

Ferner weist die Führungsschiene 24b eine stirnseitig zur Rolle liegende Seitenwand 30b auf, die eine Arretierungsausnehmung 32b aufweist. In diese Ausnehmung kann der Arretierungsbolzen 34b der in der Achse der Rolle 22b verschiebbar geführt ist in einer Verriegelungsposition eingeschoben werden. Eine Vorderansicht auf die Verbindungseinrichtung im verriegelten Zustand ist in Fig. 5 dargestellt.

Fig. 4 zeigt eine Schnittansicht der Verbindungseinrichtung 18 in einer Schnittansicht B-B gemäß Fig. 2. Die Rollen 22a, 22b sind jeweils in ihren Führungsschienen 24a, 24b geführt. In der dargestellten Arbeitsstellung bei unebener Aufstandsfläche liegt die Rolle 22b im Übergang vom mittleren Bereich in den unteren Bereich der Führungsbahn und die Rolle 22a im Übergang vom mittleren zum oberen Bereich der Führungsbahn. Bei ebenem Boden liegen vorzugsweise beide Rollen in der Mitte des mittleren Bereichs der Führungsbahn.

Fig. 5 zeigt eine Vorderansicht eines Ausschnitts der Verbindungseinrichtung in Verriegelungsposition. In dieser Darstellung sind die Arretierbolzen 34a, 34b ausgefahren und durchsetzen die Arretier-Ausnehmungen 32a, 32b, so dass der Fixierrahmen 26 formschlüssig gegenüber dem Verbindungseinrichtungsrahmen 14 gehalten ist. Ferner ist ein Querlenker 36 mit dem Fixierrahmen 26 und dem nicht gezeigten Maschinenrahmen verbunden. Auf diese Weise kann ein Querversatz des Fixierrahmens 26 gegenüber dem Verbindungseinrichtungsrahmen 14 durch den Querlenker 36 beeinflusst werden. In der dargestellten verriegelten Position kann die Arbeitseinheit beispielsweise von einer Arbeitsstellung in eine Transportstellung verbracht werden.

Fig. 6 zeigt eine Vorderansicht eines Ausschnitts der Verbindungseinrichtung in Aushebeposition. Hier ist gut zu erkennen, dass bei Anheben des Verbindungseinrichtungsrahmens 14 gegenüber dem Boden, die Rollen am unteren Abschlussblech 28a, 28b der Führungsschiene 24a, 24b anliegen. Die Arbeitseinheit ist mit den Rollen, insbesondere dem Fixierrahmen 26, der die Rollen gegeneinander ortsfest festlegt, verbunden.

Der Abstand der Rolle vom Anlenkungspunkt P2, des Oberlenkers an der Arbeitseinheit, bleibt dabei erhalten, wodurch die Stabilität erhöht wird und gleichzeitig eine große Bodenfreiheit erreicht werden kann.

Fig. 7 zeigt eine perspektivische Ansicht einer gattungsgemäßen landwirtschaftlichen Maschine 40 nach dem Stand der Technik, die einen Maschinenrahmen 42 mit einem Zentralrahmen und zwei Querrahmen 44a, 44b, an welchen jeweils eine Arbeitseinheit 46a, 46b angebunden ist, aufweist.

Die Arbeitseinheit 46a, 46b, können nunmehr mit je einem Querrahmen 44a, 44b der landwirtschaftlichen Maschine über eine erfindungsgemäße Verbindungseinrichtung verbunden werden, wie sie in den Figuren 1 bis 6 beschrieben verbunden sind.

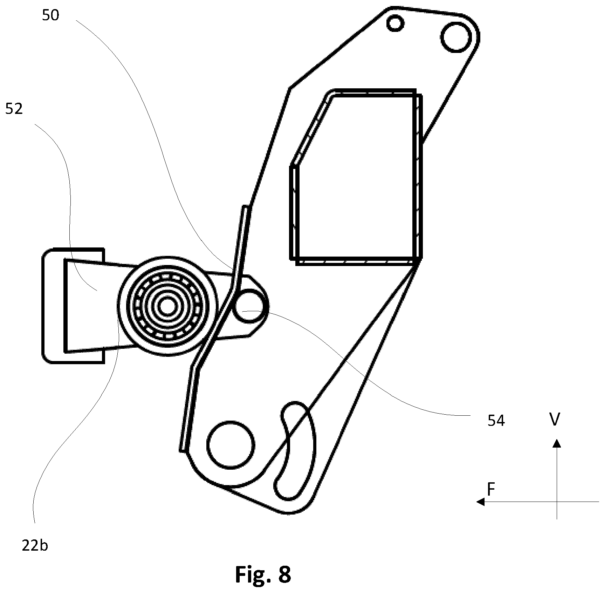

Fig. 8 zeigt eine weitere Ausgestaltung des Kurvengelenks alternativ zur Ausgestaltung gemäß Fig. 3. Es umfasst eine Führungsfläche 50 auf der eine Rolle 22b geführt ist. Anstelle einer beidseitig abgeschlossenen Führungsschiene ist die Kurvenbahn durch ein Führungsblech gebildet, das als Führungsfläche 50 dient, an dem entlang die Rolle 22b geführt wird. Das Führungsblech ist so ausgerichtet, dass die Rolle 22b in Arbeitsrichtung der Arbeitseinheit vor der Führungsfläche 50 liegt. Die Rolle22b ist an einer Konsole 52 befestigt, an der ein Zapfen 54 befestigt ist, der auf der, der Rolle 22b gegenüberliegenden Fläche des Führungsblechs angeordnet ist. So stützt sich die Arbeitseinheit über die Rolle 22b am Führungsblech 50 ab. Der Zapfen 54 sorgt dafür, dass die Arbeitseinheit nicht in Fahrtrichtung F wegklappen kann.

### Bezugszeichenliste

- 10: Landwirtschaftliche Maschine
- 11: Maschinenrahmen
- 12: Arbeitseinheit
- 14: Verbindungseinrichtungsrahmen
- 16: Oberlenker
- 18: Verbindungseinrichtung
- 20a: Kurvengelenk
- 20b: Kurvengelenk
- 22a: Rolle
- 22b: Rolle
- 24a: Führungsschiene
- 24b: Führungsschiene
- 26: Fixierrahmen
- 28a: Abschlussblech
- 28b: Abschlussblech
- 30b: Seitenwand
- 32a,b: Arretierungsausnehmung
- 34a,b: Arretierungsbolzen
- 36: Querlenker
- 40: Landwirtschaftliche Maschine
- 42: Maschinenrahmen
- 44a, 44b: Querrahmen
- 46a, 46b: Arbeitseinheit
- 50: Führungsfläche
- 52: Konsole
- 54: Zapfen
- B: Boden
- MP: Momentanpol
- P1: Oberlenkeranbindungspunkt Verbindungseinrichtungsrahmen
- P2: Oberlenkeranbindungspunkt Arbeitseinheit
- V: Vertikale
- F: Fahrtrichtung
- α1: Winkel des Führungsflächenbereichs
- α2: Winkel des Führungsflächenbereichs
- α3: Winkel des Führungsflächenbereichs

## Patentansprüche

1. Landwirtschaftliche Maschine (10), umfassend einen Maschinenrahmen (11), eine mit dem Maschinenrahmen (11) verbundene Arbeitseinheit (12), die über Aufstandsmittel über den Boden geführt ist, und eine Verbindungseinrichtung (18), die die Arbeitseinheit (12) relativbeweglich zum Maschinenrahmen (11) mit diesem verbindet, die Verbindungseinrichtung (18) umfasst einen Verbindungseinrichtungsrahmen (14), einen Oberlenker (16), der die Arbeitseinheit (12) mit dem Verbindungseinrichtungsrahmen (14) an einem Oberlenkeranbindungspunkt (P1) verbindet, **dadurch gekennzeichnet, dass** die Verbindungseinrichtung (18) in Vertikalrichtung nach unten beabstandet vom Oberlenkeranbindungspunkt (P1) wenigstens zwei Kurvengelenke (20a, 20b) aufweist, deren Drehpunkt entlang einer Kurvenbahn verschiebbar ist, wobei die Kurvengelenke (20a, 20b) in Querrichtung zueinander beabstandet sind, wobei sich die Kurvenbahn im Wesentlichen entlang der Vertikalen erstreckt, wobei der Verbindungseinrichtungsrahmen (14) und die Arbeitseinheit (12) über die Kurvengelenke (20a, 20b) verbunden sind, wobei die Kurvenbahn wenigstens zwei unterschiedliche Neigungen (alpha1, alpha2) gegenüber der Vertikalen (V) aufweist.

2. Landwirtschaftliche Maschine nach Anspruch 1, **dadurch gekennzeichnet, dass** bei ebener Aufstandsfläche in Arbeitsstellung die Kurvengelenke (20a, 20b) in einer ersten Neigung derart angeordnet sind, dass sich ein Momentanpol (MP) aus dem Oberlenker (16) und den Kurvengelenken ergibt, der unterhalb des Aufstandsniveaus (B) liegt.

3. Landwirtschaftliche Maschine nach einem der Ansprüche 1 bis 2, **dadurch gekennzeichnet, dass** die Kurvenbahnen drei Bereiche aufweisen, ein in Vertikalrichtung gesehen untersten Bereich, einen vertikal gesehen darüber liegenden mittleren Bereich, und einen vertikal über dem mittleren Bereich liegenden oberen Bereich, wobei der mittlere Bereich eine Führung in einem Winkel gegenüber der Vertikalen ermöglicht, der größer ist als der Winkel des unteren und des oberen Bereichs.

4. Landwirtschaftliche Maschine nach Anspruch 3, **dadurch gekennzeichnet, dass** der Winkel (alpha1, alpha3) zwischen der Kurvenbahn des untersten und des obersten Bereichs zwischen 0° und 15° liegt, und der Winkel des mittleren Bereichs (alpha2) zwischen 10° und 45° liegt.

5. Landwirtschaftliche Maschine nach einem der vorangehenden Ansprüche, **dadurch gekennzeichnet, dass** die Verschiebbarkeit des Kurvengelenks (20a, 20b) entlang der Kurvenbahn nach unten, insbesondere durch einen Anschlag, begrenzt ist.

6. Landwirtschaftliche Maschine nach einem der vorangehenden Ansprüche, **dadurch gekennzeichnet, dass** die Kurvengelenke (20a, 20b) eine Kurvenbahn, insbesondere eine Führungsschiene (24a, 24b) oder Führungsfläche (50), und ein Drehlager, insbesondere eine Rolle (22a, 22b), umfassen, wobei die Kurvenbahn verbindungseinrichtungsrahmenseitig und das Drehlager arbeitseinheitsseitig angebunden ist.

7. Landwirtschaftliche Maschine nach Anspruch 6, **dadurch gekennzeichnet, dass** die Rollen (22a, 22b) koaxial zueinander gelagert sind, und dass die Führungsschienen (24a, 24b) oder Führungsflächen (50) ortsfest zueinander angeordnet sind.

8. Landwirtschaftliche Maschine nach Anspruch 7, **dadurch gekennzeichnet, dass** die Führungsfläche (50) oder die Führungsschienen (24a, 24b) in Vertikalrichtung, insbesondere mittels einer Gelenkanordnung, verschiebbar zum Maschinenrahmen ausgebildet sind.

9. Landwirtschaftliche Maschine nach einem der Ansprüche 6 bis 8, **dadurch gekennzeichnet, dass** die Führungsschiene (24a, 24b) oder die Führungsfläche (50) fest mit dem Verbindungseinrichtungsrahmen (14) oder winkelveränderlich um eine Achse quer zur Arbeitsrichtung mit dem Verbindungseinrichtungsrahmen (14) verbunden ist und die Achse der Rolle (22a, 22b) mit der Arbeitseinheit.

10. Landwirtschaftliche Maschine nach Anspruch 9, **dadurch gekennzeichnet, dass** der Verbindungseinrichtungsrahmen (14) relativ, insbesondere vertikal, verschiebbar zum Maschinenrahmen (11) angeordnet ist.

11. Landwirtschaftliche Maschine, **dadurch gekennzeichnet, dass** die Verbindungseinrichtung (18) Arretiermittel umfasst, um die Kurvengelenke (20a, 20b) in einer vertikalen Lage zu arretieren.

12. Landwirtschaftliche Maschine nach Anspruch 11, **dadurch gekennzeichnet, dass** die Führungsschiene (24a, 24b) die Rolle (22a, 22b) dreiseitig einfasst, wobei in der Wand, die sich stirnseitig zu den Rollen (22a, 22b) befindet, Ausnehmungen (32a, 32b) für den Eingriff von Arretierbolzen (34a, 34b) vorgesehen sind.

13. Landwirtschaftliche Maschine nach Anspruch 12, **dadurch gekennzeichnet, dass** der Arretierbolzen (34a, 34b) axialverschieblich in der Achse der Rolle (22a, 22b) gelagert ist.

14. Landwirtschaftliche Maschine nach einem der vorangehenden Ansprüche, **dadurch gekennzeichnet, dass** die Arbeitseinheit ein Pick-up-Bandschwader ist.

15. Landwirtschaftliche Maschine, nach einem der vorangehenden Ansprüche, **dadurch gekennzeichnet, dass** die landwirtschaftliche Maschine einen Maschinenrahmen (11) mit zwei Querrahmen und zwei Arbeitseinheiten umfasst, wobei jede Arbeitseinheit über eine Verbindungseinrichtung mit je einem Querrahmen verbunden ist.

## Claims

1. Agricultural machine (10) comprising: a machine frame (11), a working unit (12) which is connected to the machine frame (11) and is guided over the ground via support means, and a connecting device (18) which connects the working unit (12) to the machine frame (11) in such a manner that they can move in relation to each other, which connecting device (18) comprises a connecting device frame (14), a top link (16) which connects the working unit (12) to the connecting device frame (14) at a top link attachment point (P1), **characterized in that** the connecting device (18) has at least two cam joints (20a, 20b) which are spaced vertically downward from the top link attachment point (P1), with the pivot point of said cam joints (20a, 20b) being movable along a cam track, the cam joints (20a, 20b) are spaced apart from one another in the transverse direction, wherein the cam track extends substantially along the vertical, the connecting device frame (14) and the working unit (12) are connected via the cam joints (20a, 20b), and the cam track has at least two different inclinations (alpha1, alpha2) with respect to the vertical (V).

2. Agricultural machine according to claim 1, **characterized in that** in the working position, when the supporting surface is flat, the cam joints (20a, 20b) are arranged at a first inclination in such a way that an instantaneous center of rotation (MP) results from the top link (16) and the cam joints, which instantaneous center of rotation (MP) lies below the supporting surface level (B).

3. Agricultural machine according to any one of claims 1 to 2 above, **characterized in that** said cam tracks have three regions, a lowermost region as viewed vertically, a middle region above said lowermost region as viewed vertically, and an upper region above said middle region as viewed vertically, which middle region allows guidance at an angle with respect to the vertical that is greater than the angle of said lowermost and upper regions.

4. Agricultural machine according to claim 3, **characterized in that** the angle (alpha1, alpha3) between the cam track each of the lowermost region and the uppermost region is between 0° and 15°, and the angle (alpha2) of the middle region is between 10° and 45°.

5. Agricultural machine according to any one of the preceding claims, **characterized in that** the displaceability of the cam joint (20a, 20b) along the cam track is limited in the downward direction, in particular by a stop.

6. Agricultural machine according to any one of the preceding claims, **characterized in that** the cam joints (20a, 20b) comprise a cam track, in particular a guide rail (24a, 24b) or a guide surface (50), and a pivot bearing, in particular a roller (22a, 22b), with the cam track being connected to the side of the connecting device frame and the pivot bearing being connected to side of the working unit.

7. Agricultural machine according to claim 6, **characterized in that** the rollers (22a, 22b) are mounted coaxially in relation to one another, and that the guide rails (24a, 24b) or the guide surfaces (50) are arranged in a stationary manner in relation to one another.

8. Agricultural machine according to claim 7, **characterized in that** the guide surface (50) or the guide rails (24a, 24b) are adapted to be displaceable in the vertical direction relative to the machine frame, in particular by means of a joint assembly.

9. Agricultural machine according to any one of claims 6 to 8 above, **characterized in that** the guide rail (24a, 24b) or the guide surface (50) is connected to the connecting device frame (14) either in a fixed manner or in an angularly variable manner about an axis transversely to the working direction, and the axis of the roller (22a, 22b) is connected to the working unit.

10. Agricultural machine according to claim 9, **characterized in that** the connecting device frame (14) is arranged so as to be displaceable, in particular vertically, relative to the machine frame (11).

11. Agricultural machine, **characterized in that** the connecting device (18) comprises locking means to lock the cam joints (20a, 20b) in a vertical position.

12. Agricultural machine according to claim 11, **characterized in that** the guide rail (24a, 24b) encloses the roller (22a, 22b) on three sides thereof, with recesses (32a, 32b) for the engagement of locking bolts (34a, 34b) being provided in the wall located on the front side of the rollers (22a, 22b).

13. Agricultural machine according to claim 12, **characterized in that** the locking pin (34a, 34b) is mounted so as to be axially displaceably in the axis of the roller (22a, 22b).

14. Agricultural machine according to any one of the preceding claims, **characterized in that** the working unit is a pickup belt merger.

15. Agricultural machine according to any one of the preceding claims, **characterized in that** the agricultural machine comprises a machine frame (11) with two transverse frames and two working units, with a connecting device connects each working unit to a transverse frame each.

## Revendications

1. Machine agricole (10), comprenant un cadre de machine (11), une unité de travail (12) reliée au cadre de machine (11), qui est guidée sur le sol par l'intermédiaire de moyens de contact au sol, et un système de liaison (18), qui relie l'unité de travail (12) de manière relativement mobile par rapport au cadre de machine (11) à celui-ci, le système de liaison (18) comprend un cadre de système de liaison (14), un bras supérieur (16), qui relie l'unité de travail (12) au cadre de système de liaison (14) sur un point de raccordement de bras supérieur (P1), **caractérisée en ce que** le système de liaison (18) présente dans la direction verticale vers le bas de manière espacée du point de raccordement de bras supérieur (P1) au moins deux articulations curvilignes (20a, 20b), dont le point d'appui est déplaçable le long d'une voie curviligne, dans laquelle les articulations curvilignes (20a, 20b) sont espacées l'une de l'autre dans la direction transversale, dans laquelle la voie curviligne s'étend sensiblement le long de la verticale, dans laquelle le cadre de système de liaison (14) et l'unité de travail (12) sont reliés par l'intermédiaire des articulations curvilignes (20a, 20b), dans laquelle la voie curviligne présente au moins deux inclinaisons (alpha 1, alpha 2) différentes par rapport à la verticale (V).

2. Machine agricole selon la revendication 1, **caractérisée en ce que** lorsque la surface de contact au sol est plane dans la position de travail les articulations curvilignes (20a, 20b) sont disposées dans une première inclinaison de telle sorte qu'il en résulte un axe instantané de rotation (MP) composé du bras supérieur (16) et des articulations curvilignes, qui se situe au-dessous du niveau du contact au sol (B).

3. Machine agricole selon l'une quelconque des revendications 1 à 2, **caractérisée en ce que** les voies curvilignes présentent trois zones, une zone la plus basse vue dans la direction verticale, une zone centrale située au-dessus vue verticalement, et une zone supérieure située verticalement au-dessus de la zone centrale, dans laquelle la zone centrale présente un guidage par rapport à la verticale, qui est supérieur à l'angle de la zone inférieure et de la zone supérieure.

4. Machine agricole selon la revendication 3, **caractérisée en ce que** l'angle (alpha 1, alpha 3) entre la voie curviligne de la zone la plus basse et de la zone la plus haute est compris entre 0° et 15°, et l'angle de la zone centrale (alpha2) est compris entre 10° et 45°.

5. Machine agricole selon l'une quelconque des revendications précédentes, **caractérisée en ce que** la capacité de déplacement de l'articulation curviligne (20a, 20b) le long de la voie curviligne est délimitée vers le bas, en particulier par une butée.

6. Machine agricole selon l'une quelconque des revendications précédentes, **caractérisée en ce que** les articulations curvilignes (20a, 20b) comprennent une voie curviligne, en particulier un rail de guidage (24a, 24b) ou une surface de guidage (50), et un palier rotatif, en particulier un cylindre (22a, 22b), dans laquelle la voie curviligne est raccordée côté cadre de système de liaison et le palier rotatif côté unité de travail.

7. Machine agricole selon la revendication 6, **caractérisée en ce que** les cylindres (22a, 22b) sont montés de manière coaxiale l'un par rapport à l'autre, et que les rails de guidage (24a, 24b) ou surfaces de guidage (50) sont disposés de manière fixe les uns par rapport aux autres.

8. Machine agricole selon la revendication 7, **caractérisée en ce que** la surface de guidage (50) ou les rails de guidage (24a, 24b) sont réalisés de manière à pouvoir se déplacer par rapport au cadre de machine dans la direction verticale, en particulier au moyen d'un ensemble d'articulation.

9. Machine agricole selon l'une quelconque des revendications 6 à 8, **caractérisée en ce que** le rail de guidage (24a, 24b) ou la surface de guidage (50) est relié(e) fixement au cadre de système de liaison (14) ou, à angle variable autour d'un axe transversalement par rapport à la direction de travail, au cadre de système de liaison (14) et l'axe du cylindre (22a, 22b) à l'unité de travail.

10. Machine agricole selon la revendication 9, **caractérisée en ce que** le cadre de système de liaison (14) est disposé de manière à pouvoir se déplacer de façon relative, en particulier verticalement, par rapport au cadre de machine (11).

11. Machine agricole, **caractérisée en ce que** le système de liaison (18) comprend des moyens d'arrêt, afin d'arrêter les articulations curvilignes (20a, 20b) dans une position verticale.

12. Machine agricole selon la revendication 11, **caractérisée en ce que** le rail de guidage (24a, 24b) comprend le cylindre (22a, 22b) sur trois côtés, dans laquelle dans la paroi, qui se trouve frontalement par rapport aux cylindres (22a, 22b), des évidements (32a, 32b) sont prévus pour l'insertion de boulons d'arrêt (34a, 34b).

13. Machine agricole selon la revendication 12, **caractérisée en ce que** le boulon d'arrêt (34a, 34b) est monté de manière axialement mobile dans l'axe du cylindre (22a, 22b).

14. Machine agricole selon l'une quelconque des revendications précédentes, **caractérisée en ce que** l'unité de travail est un andaineur à tapis ramasseur.

15. Machine agricole selon l'une quelconque des revendications précédentes, **caractérisée en ce que** la machine agricole comprend un cadre de machine (11) avec deux cadres transversaux et deux unités de travail, dans laquelle chaque unité de travail est reliée à respectivement un cadre transversal par l'intermédiaire d'un système de liaison.
